## Europäisches Patentamt
## European Patent Office
## Office européen des brevets

(11) Veröffentlichungsnummer : **0 410 982 B1**

(12)

# EUROPÄISCHE PATENTSCHRIFT

(45) Veröffentlichungstag der Patentschrift :
**15.07.92 Patentblatt 92/29**

(51) Int. Cl.$^5$ : **B60P 1/44**, F15B 3/00

(21) Anmeldenummer : **89903958.0**

(22) Anmeldetag : **12.04.89**

(86) Internationale Anmeldenummer :
**PCT/AT89/00034**

(87) Internationale Veröffentlichungsnummer :
**WO 89/10283 02.11.89 Gazette 89/26**

(54) **HYDRAULISCHE DRUCKÜBERSETZUNGSEINRICHTUNG ZUM VERSCHWENKEN EINER LASTTRAGENDEN PLATTFORM.**

(30) Priorität : **18.04.88 AT 992/88**

(43) Veröffentlichungstag der Anmeldung :
**06.02.91 Patentblatt 91/06**

(45) Bekanntmachung des Hinweises auf die Patenterteilung :
**15.07.92 Patentblatt 92/29**

(84) Benannte Vertragsstaaten :
**AT BE CH DE FR GB IT LI LU NL SE**

(56) Entgegenhaltungen :
**EP-A- 0 277 686**
**DE-U- 7 024 806**
**FR-A- 2 353 734**
**FR-A- 2 491 015**

(73) Patentinhaber : **WEBER, Gisela**
**Hauptplatz 23**
**A-2474 Gattendorf (AT)**

(72) Erfinder : **WEBER, Gisela**
**Hauptplatz 23**
**A-2474 Gattendorf (AT)**

(74) Vertreter : **Holzer, Walter, Dipl.-Ing. et al**
**Patentanwälte, Dipl.-Ing. Dr. techn. Schütz**
**Alfred, Dipl.-Ing. Holzer Walter, Dipl.-Ing.**
**Pfeifer Otto, Fleischmanngasse 9**
**A-1040 Wien (AT)**

**Beschreibung**

Die Erfindung betrifft eine hydraulische Druckübersetzungseinrichtung zum Verschwenken einer lasttragenden Plattform, insbesondere einer hydraulisch betätigten Ladebordwand eines Lastfahrzeuges.

Um auf den Boden abgesenkte, um ihre Schwenkachse gekippte Ladebordwände von Lastfahrzeugen oder lastaufnehmende Teile von Hubstaplern od.dgl., die eine Auffahrrampe bilden, zum Anheben wieder horizontal zu stellen, wird üblicherweise im Gehäuse des einen Motor, eine Pumpe und eine Steuereinrichtung umfassenden hydraulischen Betätigungsaggregates eine Druckübersetzungseinrichtung vorgesehen. Der Hydraulikzylinder dieser Einrichtung steht über Hydraulikleitungen und Leitungsverbindungen mit dem Hubzylinder und mit dem Schließzylinder der Ladebordwand od.dgl. sowie mit der Steuereinrichtung in Verbindung, die in platzaufwendiger Weise getrennt vom Druckübersetzer angeordnet ist und für deren Anschluß spezielle Leitungsverbindungen erforderlich sind. Eine Einrichtung dieser Art ist aus der DE-C-7 024 806 bekannt.

Die Erfindung zielt darauf ab, eine Einrichtung der angegebenen Art zu schaffen, die kompakte Ausbildung hat und in dem den Motor und die Pumpe enthaltenden Gehäuse des Betätigungsaggregates nur geringen Platz beansprucht. Gegenstand der Erfindung ist eine hydraulische Druckübersetzungseinrichtung zum Verschwenken einer lasttragenden Plattform, insbesondere einer hydraulischen Ladebordwand eines Fahrzeuges, mit einem Hydraulikzylinder, in welchem ein Kolben verschiebbar angeordnet ist und dessen Zylinderkammern mit einem Hubzylinder und einem Schwenkzylinder der Plattform über Leitungen in Verbindung stehen, wobei in diese Verbindungsleitungen zumindest ein Absenkventil und ein Schaltventil eingeschaltet sind. Bei einer solchen Einrichtung wird erfindungsgemäß vorgeschlagen, daß diese Steuerventile in Bohrungen eines stirnseitigen Abschnittes des Hydraulikzylinders angeordnet sind, welcher Abschnitt die Anschlüsse für den Hubzylinder und den Schwenkzylinder, für die Druckmediumzufuhr und für eine Tankrückleitung sowie die Verbindungsleitungen enthält, von denen jeweils eine Verbindungsleitung zu einer der beiden Zylinderkammern beidseits des Kolbens führt.

Mit dieser Konstruktion wird eine Druckübersetzungseinrichtung mit integrierter Steuerung geschaffen, die außerordentlich kompakte Ausbildung hat und im Gehäuse des hydraulischen Betätigungsaggregates mit geringem Aufwand an Anschlußverbindungen untergebracht werden kann.

Gemäß einer bevorzugten Ausführungsform der Erfindung sind im stirnseitigen Abschnitt des Hydraulikzylinders ferner ein Sicherheitsventil und ein Rückschlagventil in der Druckmediumzufuhrleitung angeordnet sowie vorzugsweise ein Druckbegrenzungsschalter vorgesehen.

Die Erfindung wird nachfolgend an einem Ausführungsbeispiel unter Bezugnahme auf die Zeichnung näher erläutert. Es zeigen:

Fig. 1 einen Axialschnitt einer Einrichtung gemäß der Erfindung,

Fig. 2 einen Querschnitt der Einrichtung nach der Linie II-II in Fig. 1,

Fig. 3 eine Draufsicht zu Fig. 1, und

Fig. 4 das hydraulische Schaltschema der Einrichtung.

Die für eine hydraulische Ladebordwand eines Lastfahrzeuges bestimmte Einrichtung weist einen Hydraulikzylinder 1 auf, der aus zwei ineinandergeschraubten Zylinderteilen 1', 1'' besteht. Im Zylinder 1 ist ein Kolben 2 verschiebbar, der durch eine Kolbenfeder 2' in der Zeichnung nach rechts vorgespannt ist. Die vom Zylinderteil 1 begrenzte Zylinderkammer 3' mit dem größeren Durchmesser steht über eine Hydraulikleitung 4 mit einer Querbohrung 5 im Stirnabschnitt des Zylinderteiles 1'' in Verbindung, der die Zylinderkammer 3'' mit dem kleineren Durchmesser begrenzt, in welche sich ein Kolbenfortsatz hineinerstreckt. In der Querbohrung 5 ist ein hydraulisches Schältventil 6 angeordnet. Die Bohrung 5 steht über zwei parallele Kanäle 7, 8 mit zwei an der Stirnseite des Zylinderteiles 1'' angeordneten, mit Mengenregelventilen ausgestatteten Druckanschlüssen 7', 8' in Verbindung, von denen der Anschluß 7' dem (nicht gezeigten) Hubzylinder der Ladebordwand und der Anschluß 8' deren (ebenfalls nicht gezeigten) Schließzylinder zugeordnet ist. Die Querbohrung 5 steht außerdem über eine Bohrung 5' mit der Zylinderkammer 3'' im Zylinderteil 1'' in Verbindung.

Der Zylinderteil 1'' wird ferner von einer vertikalen Bohrung 10 durchsetzt, in welche von unten her eine Druckmediumleitung 11 eingesetzt ist. In das obere Ende der Bohrung 10 ist ein Sicherheitsventil 12 eingeschraubt. Die Bohrung 10 steht mit der Bohrung 5 über einen Kanal 9 in Verbindung, in den ein Rückschlagventil 13 eingeschaltet ist. Über das Sicherheitsventil 12 steht die Bohrung 10 auch mit einem Anschluß 14 an einen Hydrauliktank in Verbindung.

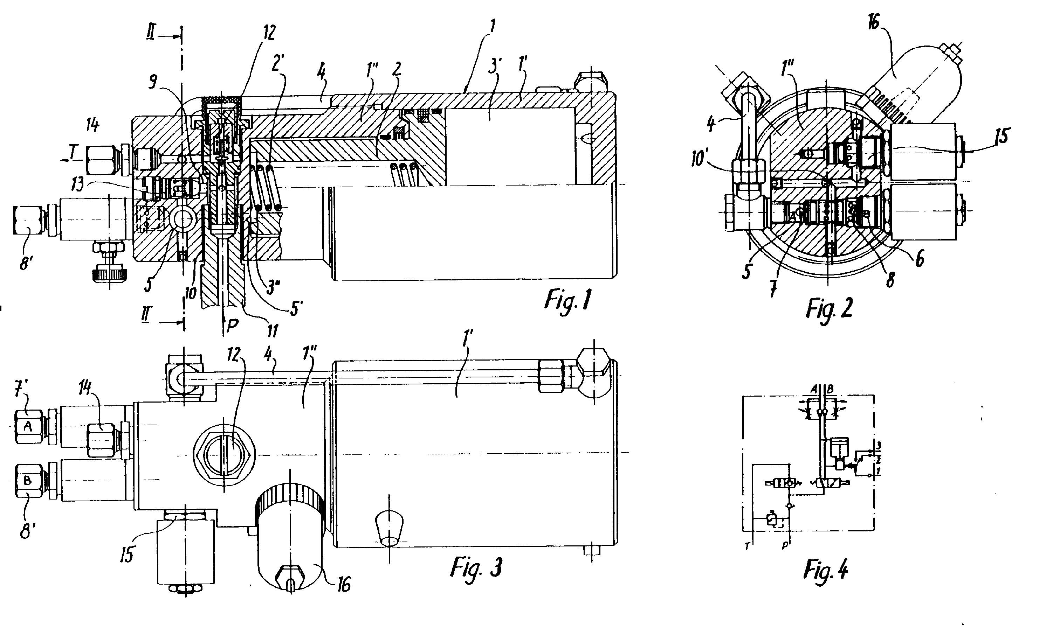

Wie Fig. 2 zeigt, ist im Stirnabschnitt des Zylinderteiles 1'' parallel zum Schaltventil 6 ein Absenkventil 15 vorgesehen, das in die Verbindung zwischen dem Schaltventil 6 bzw. der Querbohrung 5 und dem Tankanschluß 14 eingreift. Gemäß den Fig. 2 und 3 ist am Zylinderteil 1'' auch ein Druckbegrenzungsschalter 16 vorgesehen.

Zum Absenken der Ladebordwand aus einer angehobenen horizontalen in eine abgesenkte Stellung wird das Absenkventil 15 elektrisch betätigt, so daß das Druckfluid aus dem Hubzylinder über den Anschluß 7' und

2

die Leitungskanäle im Zylinderteil 1″ in den Tank strömen kann. Nach dem Aufsetzen der Ladebordwand auf den Boden wird der Hubzylinder drucklos. Unter der Wirkung der Feder 2′ und des die kleinere Fläche des kolbens 2 über die Bohrung 5′ beaufschlagenden Druckmediums wird der Kolben 2 aus der in Fig. 1 gezeigten Stellung nach rechts bewegt. Das über die Leitung 4 aus der Zylinderkammer 3′ verdrängte Medium strömt in den Tank. Die Ladebordwand schwenkt unter dem Eigengewicht bzw. unter Last in eine Schrägstellung, in der sie eine Auffahrrampe bildet.

Zum erneuten Anheben der Ladebordwand wird das Absenkventil 15 geschlossen und über das Schaltventil 6 und die Leitung 4 die rechte Zylinderkammer 3′ mit Druckmedium versorgt, wodurch sich der Kolben 2 nach links bewegt, wobei etwa die 3-fache Kolbenkraft erzeugt wird. Das über den Kanal 5′ verdrängte Medium beaufschlagt den Schließzylinder über den Anschluß 8′ zum Horizontalstellen der Ladebordwand. Dieser Vorgang ist beendet, sobald der Kolben 2 seine linke Endstellung erreicht hat und der Hubzylinder wieder druckbeaufschlagt wird.

Aus der vorstehenden Beschreibung ergibt sich, daß alle für das Verschwenken der Ladebordwand erforderlichen Steuereinrichtungen in die Druckübersetzungseinrichtung integriert sind, die somit als eine kompakte Einheit in das Betätigungsaggregat der Ladebordwand eingebaut werden kann.

## Patentansprüche

1. Hydraulische Druckübersetzungseinrichtung zum Verschwenken einer lasttragenden Plattform, insbesondere einer hydraulischen Ladebordwand eines Fahrzeuges, mit einem Hydraulikzylinder (1), in welchem ein Kolben (2) verschiebbar angeordnet ist und dessen Zylinderkammern (3′, 3″) mit einem Hubzylinder und einem Schwenkzylinder der Plattform über Leitungen in Verbindung stehen, wobei in diese Verbindungsleitungen zumindest ein Absenkventil (15) und ein Schaltventil (6) eingeschaltet sind, dadurch gekennzeichnet, daß diese Steuerventile (15, 6) in Bohrungen (5) eines stirnseitigen Abschnittes des Hydraulikzylinders (1) angeordnet sind, welcher Abschnitt die Anschlüsse (7′, 8′, 11, 14) für den Hubzylinder und den Schwenkzylinder, für die Druckmediumzufuhr und für eine Tankrückleitung sowie die Verbindungsleitungen enthält, von denen jeweils eine Verbindungsleitung (5′, 4) zu einer der beiden Zylinderkammern (3″, 3′) beidseits des Kolbens (2) führt.

2. Einrichtung nach Anspruch 1, dadurch gekennzeichnet, daß im stirnseitigen Abschnitt des Hydraulikzylinders (1) ferner ein Sicherheitsventil (12) und ein Rückschlagventil (13) in der Druckmediumzufuhrleitung angeordnet sind sowie vorzugsweise ein Druckbegrenzungsschalter (16) vorgesehen ist.

## Claims

1. Hydraulic pressure transmitting apparatus for pivoting a load bearing platform, particularly a hydraulic tailgate of a vehicle, comprising a hydraulic cylinder (1) with a piston (2) slidably arranged therein and having its cylinder chambers (3′, 3″) in communication with a lifting cylinder and a pivoting cylinder of the platform by ways of connecting conduits, at least one lowering valve (15) ,and one pilot valve (6) being incorporated into these connecting conduits, characterized in that these control valves (15, 6) are arranged in bores (5) in a forward portion of the hydraulic cylinder (1), which portion houses fittings (7′, 8′, 11, 14) of the lifting cylinder and the pivoting cylinder, of a pressure fluid supply and of a reservoir return conduit as well as said connecting conduits of which one each (5′, 4) leads to a respective one of the two cylinder chambers (3″, 3′) on opposite sides of the piston (2).

2. Apparatus in accordance with claim 1, characterized by the fact that a safety valve (12) and a check valve (13) connected to the pressure fluid supply conduit as well as, preferably, a pressure limiting switch (16) are additionally arranged in the forward portion of the hydraulic cylinder (1).

## Revendications

1. Dispositif hydraulique multiplicateur de pression pour faire pivoter une plate-forme porte-charge, en particulier un hayon hydraulique de chargement d'un véhicule, comprenant un vérin hydraulique (1) dans lequel un piston (2) est monté mobile en translation et dont les chambres (3′, 3″) communiquent par des conduites de liaison avec un vérin de levage et un vérin de pivotement de la plate-forme, au moins une soupape d'abaissement (15) et une soupape de commande (6) étant montées dans ces conduites de liaison, caractérisé en ce que ces soupapes de commande (15, 6) sont disposées dans des perçages (5) d'une partie frontale du vérin hydraulique (1), partie qui contient les raccordements (7', 8', 11, 14) pour le vérin de levage et le vérin de pivotement, pour l'amenée de fluide sous pression et pour une conduite de retour à la cuve ainsi que les conduites de liaison parmi lesquelles une conduite de liaison (5', 4) mène à l'une des deux chambres de vérin (3'', 3') situées de part et d'autre du piston (2).

2. Dispositif selon la revendication 1, caractérisé en ce que la partie frontale du vérin hydraulique (1) comporte en outre une soupape de sécurité (12) et un clapet anti-retour (13) disposés dans la conduite d'amenée de fluide sous pression ainsi que de préférence un contacteur-limiteur de pression (16).

Fig. 2

Fig. 4

Fig. 1

Fig. 3